Europäisches Patentamt

(19) European Patent Office

Office européen des brevets

(11) Numéro de publication : **0 301 932 B1**

(12)    **FASCICULE DE BREVET EUROPEEN**

(45) Date de publication du fascicule du brevet :
16.10.91 Bulletin 91/42

(51) Int. Cl.⁵ : **C08F 8/48**

(21) Numéro de dépôt : **88401789.8**

(22) Date de dépôt : **08.07.88**

(54) **Matériau polymère insoluble à sites réactifs condensés, notamment du type groupe anhydride ou ester actif, procédé de préparation de ce matériau polymère et application de ce matériau.**

(30) Priorité : **20.07.87 FR 8710207**

(43) Date de publication de la demande :
**01.02.89 Bulletin 89/05**

(45) Mention de la délivrance du brevet :
**16.10.91 Bulletin 91/42**

(84) Etats contractants désignés :
**AT BE CH DE FR GB IT LI NL SE**

(56) Documents cités :
**EP-A- 0 076 691**
**FR-A- 2 313 418**
**US-A- 3 137 660**

(73) Titulaire : **ACOME, SOCIETE COOPERATIVE DE TRAVAILLEURS**
**14 rue de Marignan**
**F-75008 Paris (FR)**

(72) Inventeur : **Boillot, Béatrice, Marie-Jeanne**
**25-27, boulevard Arago**
**F-75013 Paris (FR)**
Inventeur : **Buvet, René Emile**
**23, allée de la Toison d'Or**
**F-94000 Creteil (FR)**

(74) Mandataire : **Kedinger, Jean-Paul et al**
**c/o Cabinet Malemont 42, avenue du Président Wilson**
**F-75116 Paris (FR)**

## Description

La présente invention a pour objet un matériau polymère à sites réactifs condensés, insoluble notamment dans les milieux aqueux, ainsi qu'un procédé de préparation de ce matériau ; elle concerne également une application de ce matériau polymère.

On connaît déjà des membranes en polymère réticulé sur lesquelles sont greffés à coeur et/ou en surface des groupes carboxyle à des concentrations pouvant atteindre 10 moles/kg de membrane sèche. De telles membranes, hautement hydrophiles et dotées de propriétés de perméabilité sélective, trouvent diverses applications en technologie de séparation par membranes.

La Demanderesse ayant noté que les groupes carboxyle greffés sur ces membranes présentaient une réactivité relativement faible vis-à-vis de la fixation par condensation de composés variés, qui limite les applications desdites membranes, elle a cherché à convertir, en phase solide polymère, ces groupes carboxyle en groupes beaucoup plus riches en énergie et, partant, beaucoup plus réactifs. Elle a ainsi abouti à la présente invention, à savoir à un matériau polymère à sites réactifs, insoluble notamment dans les milieux aqueux, qui se caractérise en ce qu'il est constitué par un polymère chimiquement inerte, insoluble notamment dans les milieux aqueux et suffisamment réticulé pour être utilisable sous une configuration définie telle qu'une configuration de membrane ou de tube, polymère sur lequel est greffé un monomère comportant au moins un groupe carboxyle et/ou un polymère de ce monomère, tout ou partie des groupes carboxyle de ce polymère réticulé, insoluble et greffé étant convertis en groupes condensés plus réactifs que les groupes carboxyle correspondants.

Pour que ledit polymère chimiquement inerte soit utilisable sous une configuration définie, il est nécessairement fortement réticulé. Du fait de cette forte réticulation, on s'attendait à ce que ce polymère ne soit perméable aux agents réactifs extérieurs qu'avec des vitesses de diffusion très faibles, et partant, à ce que la conversion des groupes carboxyle en groupes condensés plus réactifs soit extrêmement difficile. Or, il a été mis en évidence que, contre toute attente, cette conversion s'est avérée relativement aisée grâce à la mise en oeuvre de réactifs et de conditions spécifiques.

Dans ce qui précède et ce qui suit, le terme "condensé(e)s" vise les groupes, sites ou fonctions obtenus par la réunion, par liaison covalente, de deux réactifs avec élimination d'une molécule d'eau.

Dans le matériau polymère selon l'invention, le polymère chimiquement inerte, réticulé et insoluble peut être d'un type quelconque. On préfère toutefois qu'il soit choisi parmi les polyoléfines, copolyoléfines, polymères et copolymères fluorés, polyamides et copolyamides, réticulés et insolubles notamment dans les milieux aqueux. Parmi ceux-ci, on préfère tout particulièrement les polyoléfines et les polyoléfines fluorées, réticulés et insolubles notamment dans les milieux aqueux, telles qu'un polyéthylène ou un polytétrafluoroéthylène, réticulé et insoluble notamment dans les milieux aqueux.

Par ailleurs, dans le matériau polymère selon l'invention, le monomère à groupe carboxyle est avantageusement constitué par un acide carboxylique éthylèniquement insaturé et notamment par l'acide acrylique ou l'acide méthacrylique.

Quant aux groupes plus réactifs que les groupes carboxyle correspondants, constituant les sites réactifs du matériau polymère, ils sont de préférence choisis parmi les groupes anhydride d'acide, les groupes ester actif et les groupes thioester actif.

La présente invention concerne par ailleurs, un procédé de préparation du matériau polymère défini ci-dessus. Ce procédé consiste essentiellement à faire réagir un ou plusieurs agents d'anhydrisation sur tout ou partie des groupes carboxyle d'un polymère chimiquement inerte, insoluble notamment dans les milieux aqueux et suffisamment réticulé pour être utilisable sous une configuration définie telle qu'une configuration de membrane ou de tube, polymère sur lequel est greffé un monomère comportant au moins un groupe carboxyle et/ou un polymère de ce monomère, ledit polymère étant, au cours de cette réaction, de préférence immergé dans un solvant apte à provoquer son gonflement.

Par agents d'anhydrisation, il faut entendre tous agents aptes à convertir les groupes carboxyle en fonctions condensées plus riches en énergie et partant, plus réactives que les groupes carboxyle convertis correspondants. Il s'agit notamment des agents d'élimination d'eau convertissant les groupes carboxyle en groupes anhydride d'acide et les agents de formation d'ester actif ou de thioester actif. A titre d'exemples spécifiques de tels agents, on peut citer le chlorure de thionyle, le trichlorure de phosphore, l'anhydride acétique et le dicyclohexylcarbodiimide seul ou en présence d'au moins un alcool, thiol ou phénol tel que le p-nitrophénol, susceptible de conduire à la formation de groupes ester ou thioester actif riches en énergie.

Le polymère insoluble, réticulé et greffé mis en oeuvre dans ce procédé peut être obtenu par toute méthode classique de forte réticulation et de greffage. On préfère cependant le préparer en faisant réagir un monomère comportant au moins un groupe carboxyle sur un polymère chimiquement inerte, sous ou après irradiation dudit monomère et/ou dudit polymère par un faisceau d'électrons accélérés ou un rayonnement de haute énergie. Le faisceau d'électrons accélérés et le rayonnement mis en oeuvre devront bien entendu posséder une énergie suffisante pour générer la formation de radicaux libres sur le monomère et/ou le polymère chimiquement inerte ; en outre, pour engendrer la forte réticulation recherchée, l'irradiation sera avantageusement réalisée à des doses au moins égale à 1 mégarad, la limite supérieure étant la dose provoquant la dégradation du monomère et/ou du polymère. Il est à noter qu'au cours de cette réaction, il se produit à la fois une réticulation du polymère chimiquement inerte, une polymérisation éventuelle du monomère à groupe carboxyle et un greffage dudit monomère et/ou polymère de ce monomère sur le polymère chimiquement inerte avant, après et/ou simultanément à la réticulation de ce dernier polymère.

Une telle méthode de réticulation et de greffage est par exemple décrite dans le brevet britannique N° 1588625 auquel on pourra utilement se reporter.

Le monomère à groupe carboxyle est choisi parmi ceux capables d'être greffés par mise en jeu d'une réaction faisant appel à des radicaux libres. Il s'agit notamment des acides carboxyliques éthyléniquement insaturés et, en particulier, de l'acide acrylique et de l'acide méthacrylique.

Quant au polymère chimiquement inerte, il peut être d'un type quelconque, mais ou préfère toutefois qu'il soit choisi parmi les polyoléfines ou copolyoléfines, les polymères et copolymères fluorés et les polyamides et copolyamides. Parmi ceux-ci, on préfère tout particulièrement les polyoléfines et les polyoléfines fluorées telles qu'un polyéthylène ou un polytétrafluoroéthylène.

Il est à noter que, lorsque dans le procédé de préparation du matériau polymère selon l'invention, on met en oeuvre à la fois un agent d'élimination d'eau et un agent de formation d'ester ou thioester actif, il convient de mettre simultanément en présence un excès de l'agent de formation d'ester ou thioester actif et de l'agent d'élimination d'eau et le polymère réticulé, insoluble et greffé, en vue de convertir en groupes anhydride d'acide, les groupes carboxyle qui pourraient n'être pas estérifiés.

On remarquera qu'il est avantageux dans certains cas, d'utiliser dans les procédés ci-dessus, un polymère réticulé, insoluble et greffé, et un polymère chimiquement inerte qui ont été préformés pour leur conférer une configuration définie telle qu'une configuration de membrane ou de tube ; la mise en oeuvre de tels polymères permet en effet d'obtenir le matériau polymère selon l'invention avec cette même configuration.

Le matériau polymère défini ci-dessus, trouve de multiples applications notamment dans le domaine des échangeurs d'ions et dans le domaine biologique et biotechnologique.

Ainsi, on peut fixer par liaisons covalentes sur ce matériau polymère, un ou plusieurs substrats porteurs de groupe(s) nucléophile(s) ou présentant des propriétés d'échange d'ions, des propriétés catalytiques ou des propriétés biologiques, en faisant réagir un ou plusieurs substrats difonctionnels comportant d'une part ledit ou lesdits groupes et d'autre part une fonction réactive, avec les sites réactifs dudit matériau polymère. On obtient de cette manière une substance polymère insoluble notamment dans les milieux aqueux et portant des substrats présentant des propriétés nucléophiles, des propriétés d'échange d'ions, des propriétés catalytiques ou des propriétés biologiques. Il est à noter que lorsque le matériau polymère mis à réagir avec les substrats difonctionnels sus-mentionnés, se présente sous une configuration définie telle qu'une configuration de membrane ou de tube, le produit de cette réaction est obtenu avec cette même configuration.

A titre de tels substrats, on citera par exemple ceux porteurs de fonction(s) amine, hydroxyle et/ou thiol tels que les mono- ou diamines, les aminoacides et les composés macromoléculaires aminés comme les polypeptides, les protéines et les enzymes ; on citera également les substrats porteurs de fonction amine aptes, une fois fixés, à réagir de façon spécifique avec d'autres molécules présentes dans un milieu, comme des anticorps par exemple.

La quantité de substrat fixé sur le matériau polymère peut aisément être évaluée par spectrophotométrie infrarouge ou, si le substrat fixé absorbe la lumière (visible ou ultraviolette), par spectrophotométrie dans le visible ou l'ultraviolet.

Lorsque les sites réactifs du matériau polymère sont constitués par des groupes anhydride et que ces sites sont par exemple amenés en réaction avec un excès d'une diamine dialkylée sur l'un de ses atomes d'azote, un groupement carboxyle est régénéré pour chaque fonction amine ayant réagi. Il s'ensuit qu'après réaction de toute ou partie des groupes anhydride du matériau polymère, le produit résultant présente autant de groupements acides que de groupements amine basiques. Ce produit peut de ce fait être considéré comme amphotère et être utilisé comme moyen échangeur d'ions amphotère.

D'autre part, lorsque les sites réactifs du matériau polymère sont constitués par des groupes ester actif ou thioester actif et que chacun de ces sites sont par exemple amenés en réaction avec l'une fonctions amine d'une diamine, il y a fixation de cette diamine sur ledit matériau polymère et, après quaternisation éventuelle de la fonction amine restante, on obtient une substance pouvant être utilisée comme moyen échangeur d'anions.

La présente invention est illustrée ci-après par un certain nombre d'exemples donnés à titre non limitatif.

Exemple 1 : préparation d'une membrane polymère comportant des groupes anhydride

Une membrane de polyéthylène réticulé et greffé par de l'acide acrylique, par exemple obtenue conformément au procédé décrit dans le brevet britannique 1588625, et comportant 4,2 moles de groupes carboxyle par kg de membrane sèche, est immergée dans $SOCl_2$ liquide à température ambiante pendant quelques minutes. Il en résulte une conversion de 98% des groupes carboxyle en groupes anhydride d'acide. La membrane résultante est ensuite lavée à l'aide de THF anhydre ou de tout autre solvant anhydre non réactif sur les groupes anhydride d'acide. On notera qu'en lieu et place de $SOCl_2$, on peut utiliser tous autres agents déshydratants tels que $PCl_3$ ou l'anhydride acétique et obtenir des résultats comparables.

Exemple 2 : préparation d'une membrane polymère comportant des groupes anhydride

La membrane de polyéthylène réticulé et greffé par de l'acide acrylique, utilisée comme membrane de départ dans l'exemple 1, est immergée pendant une heure à 50°C, dans une solution à 0,24 M de dicyclohexylcarbodiimide (DCCI) dans le THF ou le DMF. Il en résulte une déshydratation des groupes carboxyle voisins en groupes anhydride à un niveau tel que les bandes d'absorption des fonctions COOH ne sont plus apparentes en spectroscopie infrarouge, soit à un niveau estimé à plus de 99%.

Exemple 3 : préparation d'une membrane polymère comportant des groupes ester actif

La membrane de polyéthylène réticulé et greffé par de l'acide acrylique, utilisée comme membrane de départ dans l'exemple 1, est immergée dans un mélange comprenant 0,5 M de paranitrophénol et 0,5 M de DCCI, dans le THF ou le DMF. A 50°C, la transformation des groupes carboxyle en groupes ester de paranitrophénol s'effectue à plus de 95%. Les groupes carboxyle non estérifiés restants sont convertis en groupes anhydride par action du DCCI n'ayant pas réagi.

Exemple 4 : préparation d'une membrane polymère échangeuse d'ions amphotère

Les membranes obtenues conformément aux exemples 1 et 2, sont immergées dans un milieu tampon phosphate de pH 12 à concentration molaire en N,N-diméthyléthylènediamine (N,N-DMED), à la température ambiante pendant quelques heures. Les membranes résultantes sont ensuite rincées successivement par une solution aqueuse diluée d'une base forte et une solution aqueuse diluée d'un acide fort. Il en résulte une membrane amphotère dans laquelle 50% des groupes carboxyle d'origine ont été convertis en groupes N,N-diméthyléthylènecarboxamide.

Exemple 5 : préparation d'une membrane polymère échangeuse d'anions

Le traitement de la membrane obtenue conformément à l'exemple 3, par une solution molaire de N,N-DMED dans le THF, le $CH_2Cl_2$ ou le DMF, conduit à une membrane dans laquelle les groupes carboxyle d'origine ont été convertis à plus de 95% en groupes N,N-diméthyléthylènecarboxamide. On obtient ainsi, après éventuelle quaternisation, une membrane échangeuse d'anions stable en milieu base forte à 60°C.

Exemple 6 : préparation d'une membrane polymère portant des motifs aminoacide

Par immersion de la membrane polymère obtenue à l'exemple 1 ou 2, dans une solution aqueuse tamponnée à pH 12 d'un $\alpha$-aminoacide biologique quelconque à une concentration de 0,24 M, on obtient une membrane polymère contenant ledit $\alpha$-aminoacide fixé sous forme amide. Selon l'aminoacide mis en oeuvre, ce dernier s'est fixé sur 15 à 30% des groupes carboxyle d'origine. Quand de l'histidine est par exemple utilisée à titre d'aminoacide, il y a fixation sur environ 20% des groupes carboxyle d'origine. Dans les mêmes conditions, un greffage de protéines, dotées par exemple d'activité enzymatique, est obtenu lorsque lesdites protéines présentent des groupes fonctionnels amine accessibles.

**Revendications**

1. Matériau polymère à sites réactifs, insoluble notamment dans les milieux aqueux, caractérisé en ce qu'il est constitué par un polymère chimiquement inerte, insoluble notamment dans les milieux aqueux et suffisamment réticulé pour être utilisable sous une configuration définie telle qu'une configuration de membrane ou de tube, polymère sur lequel est greffé un monomère comportant au moins un groupe carboxyle et/ou un polymère de ce monomère, tout ou partie des groupes carboxyle de ce polymère réticulé, insoluble et greffé étant convertis en groupes condensés plus réactifs que les groupes carboxyle correspondants.

2. Matériau polymère selon la revendication 1, caractérisé en ce que ledit polymère chimiquement inerte, réticulé et insoluble est choisi parmi les polyoléfines, copolyoléfines, polymères fluorés et copolymères fluorés, réticulés et insolubles notamment dans les milieux aqueux.

3. Matériau polymère selon la revendication 1 ou 2, caractérisé en ce que ledit polymère chimiquement inerte, réticulé et insoluble est un polyéthylène ou un polytétrafluoroéthylène, réticulé et insoluble notamment dans les milieux aqueux.

4. Matériau polymère selon la revendication 1, 2 ou 3, caractérisé en ce que ledit monomère est constituée par un acide carboxylique éthylèniquement insaturé.

5. Matériau polymère selon la revendication 4, caractérisé en ce que ledit monomère est l'acide acrylique ou l'acide méthacrylique.

6. Matériau polymère selon l'une des revendications précédentes, caractérisé en ce que les groupes plus réactifs que les groupes carboxyle correspondants, sont choisis parmi les groupes anhydride d'acide, les groupes ester actif et les groupes thioester actif.

7. Procédé de préparation du matériau polymère selon l'une des revendications 1 à 6, caractérisé en ce qu'il consiste essentiellement à faire réagir un ou plusieurs agents d'anhydrisation sur tout ou partie des groupes carboxyle d'un polymère chimiquement inerte, insoluble notamment dans les milieux aqueux, suffisamment réticulé pour être utilisable sous une configuration définie telle qu'une configuration de membrane ou de tube et sur lequel est greffé un monomère comportant au moins un groupe carboxyle et/ou un polymère de ce monomère.

8. Procédé selon la revendication 7, caractérisé en ce qu'au cours de la réaction, ledit polymère est immergé dans un solvant apte à provoquer son gonflement.

9. Procédé selon la revendication 7 ou 8, caractérisé en ce que les agents d'anhydrisation sont choisis parmi les agents d'élimination d'eau convertissant les groupes carboxyle en groupes anhydride d'acide, les agents de formation d'ester actif et les agents de formation de thioester actif.

10. Procédé selon la revendication 7, 8 ou 9, caractérisé en ce que les agents d'anhydrisation sont choisis parmi le chlorure de thionyl, le trichlorure de phosphore, l'anhydride acétique et le dicyclohexylcarbodiimide seul ou en mélange avec au moins un alcool, thiol ou phénol, susceptible de conduire à la formation de groupes ester actif ou thioester actif.

11. Procédé selon l'une des revendications 7 à 10, caractérisé en ce que ledit polymère réticulé, insoluble et greffé est obtenu par réaction d'un monomère comportant au moins un groupe carboxyl sur un polymère chimiquement inerte, sous ou après irradiation dudit monomère et/ou dudit polymère, à des doses au moins égales à 1 Mégarads, par un faisceau d'électrons accélérés ou un rayonnement de haute énergie.

12. Procédé selon la revendication 11, caractérisé en ce que ledit monomère est un acide carboxylique éthylèniquement insaturé.

13. Procédé selon la revendication 11 ou 12, caractérisé en ce que le polymère chimiquement inerte est une polyoléfine ou une polyoléfine fluorée.

14. Procédé selon l'une des revendications 7 à 13, pour l'obtention d'un matériau polymère présentant une configuration définie telle qu'une configuration de membrane ou de tube, caractérisé en ce que ledit polymère réticulé, insoluble et greffé et ledit polymère chimiquement inerte sont préformés pour leur conférer ladite configuration définie souhaitée.

15. Procédé de préparation d'une substance polymère insoluble notamment dans les milieux aqueux et portant des substrats présentant des propriétés nucléophiles, des propriétés d'échange d'ions, des propriétés catalytiques ou des propriétés biologiques, caractérisé en ce qu'il consiste à faire réagir un ou plusieurs substrats difonctionnels porteurs d'une part d'une fonction réactive et d'autre part de groupe(s) nucléophile(s) ou présentant des propriétés d'échange d'ions, des propriétés catalytiques ou des propriétés biologiques, avec les sites réactifs du matériau polymère selon l'une des revendications 1 à 6.

16. Procédé selon la revendication 15, caractérisé en ce que lesdits substrats sont choisis parmi ceux porteurs de fonction(s) amine, hydroxyle et/ou thiol.

17. Procédé selon la revendication 16, caractérisé en ce que lesdits substrats sont choisis parmi les mono- et diamines, les aminoacides et les composés macromoléculaires aminés.

## Claims

1. Polymer material with reactive sites which is insoluble particularly in aqueous media, characterized in that it consists of a chemically inert polymer which is insoluble particularly in aqueous media and sufficiently reticulated to be usable in a defined configuration such as a membrane or tube configuration, and onto this polymer is grafted a monomer having at least one carboxyl group and/or a polymer of this monomer, all or part of the carboxyl groups of this insoluble and grafted reticulated polymer being converted into condensed groups which are more reactive than the corresponding carboxyl groups.

2. Polymer material as claimed in claim 1, characterised in that the said chemically inert polymer which is reticulated and insoluble is chosen from amongst polyolefins, copolyolefins, fluorinated polymers and fluorinated copolymers, which are reticulated and insoluble particularly in aqueous media.

3. Polymer material as claimed in claim 1 or 2, characterised in that the said chemically inert polymer which is reticulated and insoluble is a polyethylene or a polytetrafluoroethylene which is reticulated and insoluble particularly in aqueous media.

4. Polymer material as claimed in claim 1, 2 or 3, characterised in that the said monomer consists of an ethylenically unsaturated carboxylic acid.

5. Polymer material as claimed in claim 4, characterised in that the said monomer is acrylic acid or methacrylic acid.

6. Polymer material as claimed in one of the preceding claims, characterised in that the groups which are more reactive than the corresponding carboxyl groups are chosen from amongst the acid anhydride groups, the active ester groups and the active thioester groups.

7. Method of preparing the polymer material as claimed in claims 1 to 6, characterised in that it consists essentially of causing one or more anhydrisation agents to react on all or part of the carboxyl groups of a chemically inert polymer which is insoluble particularly in aqueous media and sufficiently reticulated to be usable in a defined configuration such as a membrane or tube configuration, this polymer having grafted onto it a monomer having at least one carboxyl group and/or a polymer of this monomer.

8. Method as claimed in claim 7, characterised in that in the course of the reaction the said polymer is immersed in a solvent which is capable of causing it to swell.

9. Method as claimed in claim 7 or 8, characterised in that the anhydrisation agents are chosen from amongst the water elimination agents which convert the carboxyl groups into acid anhydride groups, the agents for formation of active ester and the agents for formation of active thioester.

10. Method as claimed in claim 7, 8 or 9, characterised in that the anhydrisation agents are chosen from amongst thionyl chloride, phosphorus trichloride, acetic anhydride and dicyclohexylcarbodiimide alone or in a mixture with at least one alcohol, thiol or phenol which is capable of leading to the formation of active ester or active thioester groups.

11. Method as claimed in one of claims 7 to 10, characterised in that the said insoluble polymer which is reticulated and grafted is obtained by reaction of a monomer having at least one carboxyl group on a chemically inert polymer during or after irradiation of the said monomer and/or the said polymer at doses at least equal to 1 megarad by a beam of accelerated electrons or by high-energy radiation.

12. Method as claimed in claim 11, characterised in that the said monomer is an ethylenically unsaturated carboxylic acid.

13. Method as claimed in claim 11 or 12, characterised in that the chemically inert polymer is a polyolefin or a fluorinated polyolefin.

14. Method as claimed in one of claims 7 to 13 for obtaining a polymer material having a defined configuration such as a membrane or tube configuration, characterised in that the said insoluble polymer which is reticulated and grafted and the said chemically inert polymer are preformed in order to give them the desired defined configuration.

15. Method of preparing a polymer substance which is insoluble particularly in aqueous media and bears substrates having nucleophilic properties, ion exchange properties, catalytic properties or biological properties, characterised in that it consists of causing one or more difunctional substrates bearing on the one hand a reactive function and on the other hand a nucleophilic group or groups or having ion exchange properties, catalytic properties or biological properties to react with the reactive sites of the polymer material as claimed in one of claims 1 to 6.

16. Method as claimed in claim 15, characterised in that the said substrates are chosen from amongst those which bear an amine, hydroxyl and/or thiol function or functions.

17. Method as claimed in claim 16, characterised in that the said substrates are chosen from amongst the mono- and diamines, amino acids and aminated macromolecular compounds.

## Patentansprüche

1. Unlösliche Polymermasse mit reaktiven, kondensierten Seitenketten, nämlich des aktiven Anhydridgruppen- oder Estertyps, **dadurch gekennzeichnet**, daß es aus einem namentlich in den wässrigen Medien chemisch inerten Polymer besteht, das ausreichend vernetzt ist, um unter einer definierten Konfiguration verwendet zu werden, wie der Konfiguration einer Membrane oder eines Röhrchens, auf welchem Polymer ein Monomer eingepflanzt ist, das mindestens eine Karboxyl-Gruppe beinhaltet und/oder ein Polymer dieses Monomers, welche ganz oder teilweise der Karboxyl-Gruppe dieses vernetzten Polymeres angehören, wobei unlösliche und eingepflanzte Bestandteile in kondensierte Gruppen umgewandelt sind, die reaktiver sind als die entsprechenden Karboxylgruppen.

2. Polymer-Masse nach Anspruch 1, **dadurch gekennzeichnet**, daß das chemisch inerte, vernetzte und unlösliche Polymer zu den Polyolefinen, Kopolyofinen, Fluorpolymeren und Fluorkopolyofinen gehört, die namentlich in wässrigen Medien vernetzt und unlöslich sind.

3. Polymer-Masse nach Anspruch 1 oder 2, **dadurch gekennzeichnet**, daß das chemisch inerte, vernetzte und unlösliche Polymer ein in den wässrigen Medien unlösbares Polyethylen oder ein Polytetrafluorethylen ist.

4. Polymer-Masse nach den Ansprüchen 2 oder 3, **dadurch gekennzeichnet**, daß das Monomer aus einer ethylenisch nicht übersättigten Karbonsäure besteht.

5. Polymer-Masse nach Anspruch 4, **dadurch gekennzeichnet**, daß das Monomer eine Acryl- oder Methacrylsäure ist.

6. Polymer-Masse nach einem der vorherigen Ansprüche 1-5, **dadurch gekennzeichnet**, daß die Gruppen die reaktiver sind als die entsprechenden Karboxyl-Gruppen, unter den Säureanhydrid-Gruppen, den Aktivester-Gruppen und den Aktivthioester-Gruppen ausgewählt sind.

7. Verfahren zur Herstellung der Polymer-Masse nach einem der Ansprüche 1 bis 6, **dadurch gekennzeichnet**, daß ein oder mehrere Anhydrisationsmittel auf das Ganze oder einen Teil der Karboxyl-Gruppen eines chemisch inerten namentlich in wässrigen Medien unlöslichen Polymers einwirkt, die genug vernetzt sind, um unter einer definierten Konfiguration, wie der Konfiguration einer Membrane oder eines Röhrchens, verwendbar zu sein, auf welchem ein Monomer eingepflanzt ist, das mindestens eine Karboxyl-Gruppe und/oder ein Polymer dieses Polymers beinhaltet.

8. Verfahren nach Anspruch 7, **dadurch gekennzeichnet**, daß während der Reaktion das Polymer in einem Lösungsmittel getaucht ist, das sein Aufquellen bewirkt.

9. Verfahren nach Anspruch 7 oder 8, **dadurch gekennzeichnet**, daß die Anhydrisationsmittel zu den Wasserabspaltungsmitteln gehören, welche die Karboxylgruppen in Säureanhydrid-Gruppen und die Aktivester- und Aktivthioester-Bildungsmitteln verwandeln.

10. Verfahren nach einem der Ansprüche 7, 8 oder 9, **dadurch gekennzeichnet**, daß die Anhydrisationsmittel unter dem Thionylchlorid, dem Phosphortrichlorid, dem essigsaueren Anhydrid und dem Dicylcohexylcarbodiimid allein oder mit mindestens einem Alkohol, wie Thiol oder Phenol gemischt, dazu geeignet sind, zu der Bildung der Aktivester- oder Aktivthioester zu führen.

11. Verfahren nach einem der Ansprüche 1 bis 10, **dadurch gekennzeichnet**, daß das vernetzte, unlösbare und eingepflanzte Polymer durch die Reaktion eines Monomers, das mindestens eine Karboxyl-Gruppe auf einem chemisch inerten Polymer beinhaltet, unter oder nach Bestrahlung durch einen Strahl von beschleunigten Elektronen oder einer hochenergetischen Bestrahlung des gesagten Monomers und/oder des gesagten Polymers unter Dosis von mindestens 1 Megarads gebildet wird.

12. Verfahren nach Anspruch 11, **dadurch gekennzeichnet**, daß das gesagte Monomer eine nicht ethylgesättigte Karboxylsäure ist.

13. Verfahren nach Anspruch 11 oder 12, **dadurch gekennzeichnet**, daß das chemisch inerte Polymer ein Polyolefin oder ein Fluorpolyolefin ist.

14. Verfahren nach einem der Ansprüche 7 bis 13 zur Darstellung einer Polymer-Masse mit definierter Konfiguration wie der Konfiguration einer Membrane oder eines Röhrchens, **dadurch gekennzeichnet**, daß das vernetzte, unlösliche und eingearbeitete Polymer und das chemisch inerte Polymer vorgeformt sind, um die gesagte gewünschte Konfiguration zu erhalten.

15. Verfahren für die Zubereitung einer in wässrigen Medien unlöslichen Polymersubstanz, die Substrate mit nukleophilen Eigenschaften, Ionen-Austausch-, katalytische oder biologische Eigenschaften aufweist, **dadurch gekennzeichnet**, daß es darin besteht, ein oder mehrere bifunktionelle Substrate reagieren zu lassen, die einerseits eine reaktive Funktion, und andererseits nukleophile Gruppe(n) tragen, oder die Ionenaustauscheigenschaften mit katalytischen oder biologischen Eigenschaften mit den reaktiven Zentren des Polymer-Materials aufweisen, entsprechend einem der Ansprüche 1 bis 6.

16. Verfahren nach Anspruch 15, **dadurch gekennzeichnet**, daß die Substrate unter diesen ausgesucht werden, die Amin-, Hydroxil- und/oder Thiolfunktion(en) tragen.

17. Verfahren nach Anspruch 16, **dadurch gekennzeichnet**, daß die gesagten Substrate zu den Mono- und Diaminen, den Aminosäuren und den makromoleküleren Amin-Verbindungen gehören.